# EUROPEAN PATENT APPLICATION

(11) **EP 4 465 583 A1**
(43) Date of publication of application: **20.11.2024**
(21) Application number: 22919490.7
(22) Date of filing: 14.01.2022
(51) Int. Cl.: H04L 7/04, H04B 1/69

(54) **WIRELESS COMMUNICATION METHOD, TERMINAL DEVICE, AND ENERGY SUPPLY NODE**

(71) Applicant: GUANGDONG OPPO MOBILE TELECOMMUNICATIONS CORP., LTD., Dongguan, Guangdong 523860 (CN)
(72) Inventor: ZUO, Zhisong, Dongguan, Guangdong 523860 (CN); XU, Weijie, Dongguan, Guangdong 523860 (CN)
(74) Representative: RGTH
(86) International application number: PCT/CN2022/072131
(87) International publication number: WO 2023/133840

(57) **Abstract**

Embodiments of this application provide a wireless communication method, a terminal device, and an energy supply node. The method includes: receiving an energy supply signal, where the energy supply signal carries synchronization information for the terminal device and/or a synchronization sequence for determining the synchronization information; and sending a reflected signal to a network device based on the synchronization information. According to the method provided in this application, a zero-power-consumption terminal can be applied to a cellular Internet of Things to enrich types and quantities of linked terminals in the network, thereby truly achieving the Internet of Everything. In addition, a synchronization error for the terminal device can be further reduced, so that the terminal device can receive/send data by using accurate timing or an accurate frequency, and thus system performance can be improved.

## Description

### TECHNICAL FIELD

Embodiments of this application relate to the communication field, and more specifically, to a wireless communication method, a terminal device, and an energy supply node.

### BACKGROUND

As a quantity of application requirements in the 5th-generation mobile communication technology (5-Generation, 5G) industry increases, there are increasingly more types of connected objects and application scenarios, and a higher requirement is also imposed on a price and power consumption of a communication terminal. Application of a battery-free and low-cost passive Internet of Things device becomes a key technology of a cellular Internet of Things, and the device can enrich types and quantities of terminals in the network, thereby truly achieving the Internet of Everything. The passive Internet of Things device may be based on an existing zero-power-consumption terminal, such as a radio frequency identification (Radio Frequency Identification, RFID) technology, and extends on this basis to be applicable to the cellular Internet of Things.

Therefore, how to apply the zero-power-consumption terminal to the cellular Internet of Things is a technical problem that needs to be urgently resolved in the art.

### SUMMARY

Embodiments of this application provide a wireless communication method, a terminal device, and an energy supply node, so that a zero-power-consumption terminal can be applied to a cellular Internet of Things to enrich types and quantities of linked terminals in the network, thereby truly achieving the Internet of Everything. In addition, a synchronization error for the terminal device can be further reduced, so that the terminal device can receive/send data by using accurate timing or an accurate frequency, thereby improving system performance.

According to a first aspect, this application provides a wireless communication method, including:
receiving an energy supply signal, where the energy supply signal carries synchronization information for the terminal device and/or a synchronization sequence for determining the synchronization information; and
sending a reflected signal to a network device based on the synchronization information.

According to a second aspect, this application provides a wireless communication method, including:
sending an energy supply signal to a terminal device, where the energy supply signal carries synchronization information for the terminal device and/or a synchronization sequence for determining the synchronization information, and the synchronization information is used by the terminal device for sending a reflected signal.

According to a third aspect, this application provides a terminal device, configured to perform the method according to the first aspect or implementations of the first aspect. Specifically, the terminal device includes a functional module configured to perform the method according to the first aspect or implementations of the first aspect.

In an implementation, the terminal device may include a processing unit, and the processing unit is configured to perform a function related to information processing. For example, the processing unit may be a processor.

In an implementation, the terminal device may include a sending unit and/or a receiving unit. The sending unit is configured to perform a sending-related function, and the receiving unit is configured to perform a receiving-related function. For example, the sending unit may be a transmitting set or a transmitter, and the receiving unit may be a receiving set or a receiver. For another example, the terminal device is a communication chip, the sending unit may be an input circuit or an interface of the communication chip, and the sending unit may be an output circuit or an interface of the communication chip.

According to a fourth aspect, this application provides an energy supply node, configured to perform the method according to the second aspect or implementations of the second aspect. Specifically, the energy supply node includes a functional module configured to perform the method according to the second aspect or implementations of the second aspect.

In an implementation, the energy supply node may include a processing unit, and the processing unit is configured to perform a function related to information processing. For example, the processing unit may be a processor.

In an implementation, the energy supply node may include a sending unit and/or a receiving unit. The sending unit is configured to perform a sending-related function, and the receiving unit is configured to perform a receiving-related function. For example, the sending unit may be a transmitting set or a transmitter, and the receiving unit may be a receiving set or a receiver. For another example, the energy supply node is a communication chip, the receiving unit may be an input circuit or an interface of the communication chip, and the sending unit may be an output circuit or an interface of the communication chip.

According to a fifth aspect, this application provides a terminal device, including a processor and a memory. The memory is configured to store a computer program, and the processor is configured to invoke and run the computer program stored in the memory to perform the method according to the first aspect or implementations of the first aspect.

In an implementation, there is one or more processors, and there is one or more memories.

In an implementation, the memory may be integrated with the processor, or the memory is disposed separated from the processor.

In an implementation, the terminal device further includes a transmitting set (transmitter) and a receiving set (receiver).

According to a sixth aspect, this application provides an energy supply node, including a processor and a memory. The memory is configured to store a computer program, and the processor is configured to invoke and run the computer program stored in the memory to perform the method according to the second aspect or implementations of the second aspect.

In an implementation, there is one or more processors, and there is one or more memories.

In an implementation, the memory may be integrated with the processor, or the memory is disposed from the processor separately.

In an implementation, the energy supply node further includes a transmitting set (transmitter) and a receiving set (receiver).

According to a seventh aspect, this application provides a chip, configured to implement the method according to either of the first aspect and the second aspect or implementations of the first aspect and the second aspect. Specifically, the chip includes a processor, configured to invoke a computer program from a memory and run the computer program, so that a device in which the chip is installed performs the method according to either of the first aspect and the second aspect or implementations of the first aspect and the second aspect.

According to an eighth aspect, this application provides a computer-readable storage medium, configured to store a computer program. The computer program enables a computer to perform the method according to either of the first aspect and the second aspect or implementations of the first aspect and the second aspect.

According to a ninth aspect, this application provides a computer program product, including computer program instructions. The computer program instructions enable a computer to perform the method according to either of the first aspect and the second aspect or implementations of the first aspect and the second aspect.

According to a tenth aspect, this application provides a computer program. When the computer program runs on a computer, the computer is enabled to perform the method according to either of the first aspect and the second aspect or implementations of the first aspect and the second aspect.

Based on the foregoing technical solutions, in this application, the synchronization information for the terminal device and/or the synchronization sequence for determining the synchronization information are/is carried in the energy supply signal, so that the terminal device can send the reflected signal to the network device based on the synchronization information. In this way, a zero-power-consumption terminal can be applied to a cellular Internet of Things to enrich types and quantities of linked terminals in the network, thereby truly achieving the Internet of Everything. In addition, a synchronization error for the terminal device can be further reduced, so that the terminal device can receive/send data by using accurate timing or an accurate frequency, thereby improving system performance.

### BRIEF DESCRIPTION OF DRAWINGS

FIG. 1 is a schematic diagram of a communication system according to an embodiment of this application.
FIG. 2 is a schematic diagram of a zero-power-consumption communication system according to this application.
FIG. 3 is a diagram of an energy harvesting principle according to an embodiment of this application.
FIG. 4 is a diagram of a backscatter communication principle according to this application.
FIG. 5 is a diagram of a circuit principle of resistance load modulation according to an embodiment of this application.
FIG. 6 is a schematic diagram of a subcarrier modulation scheme according to an embodiment of this application.
FIG. 7 is a schematic diagram of an OOK modulation scheme according to an embodiment of this application.
FIG. 8 is a schematic diagram obtained by measuring a timing error value for a zero-power-consumption circuit according to an embodiment of this application.
FIG. 9 to FIG. 11 are schematic flowcharts of wireless communication methods according to embodiments of this application.
FIG. 12 is a schematic diagram of an energy supply signal obtained by modulating a synchronization sequence onto a continuous wave according to an embodiment of this application.
FIG. 13 is a schematic block diagram of a terminal device according to an embodiment of this application.
FIG. 14 is a schematic block diagram of an energy supply node according to an embodiment of this application.
FIG. 15 is a schematic block diagram of a communication device according to an embodiment of this application.
FIG. 16 is a schematic block diagram of a chip according to an embodiment of this application.

### DESCRIPTION OF EMBODIMENTS

The following describes the technical solutions in embodiments of this application with reference to the accompanying drawings in embodiments of this application. Apparently,, the described embodiments are some rather than all of embodiments of this application. For embodiments of this application, all other embodiments obtained by a person of ordinary skill in the art without creative efforts fall within the protection scope of this application.

It should be understood that the terms "system" and "network" may often be used interchangeably in this specification. In this specification, the term "and/or" is merely an association relationship that describes associated objects, and indicates that there may be three relationships. For example, "A and/or B" may indicate the following three cases: Only A exists, both A and B exist, and only B exists. In addition, the character "/" in this specification usually indicates that there is an "or" relationship between associated objects. In embodiments of this application, the term "corresponding" may mean that there is a direct or indirect correspondence between two elements, may mean that there is an association relationship between two elements, or may mean that there is a relationship of "indicating" and "being indicated", "configuring" and "being configured", or the like. The term "indication" in this specification may be a direct indication or an indirect indication, or may mean that there is an association relationship. For example, "A indicates B" may mean that A directly indicates B, where for example, B may be obtained by using A; may mean that A indicates B indirectly, where for example, A indicates C, and B may be obtained by using C; or may mean that there is an association relationship between A and B. The term "pre-configuration" in this specification may be implemented by pre-storing a corresponding code or table in a device (for example, including a terminal device and a network device) or implemented in another manner that may be used to indicate related information. A specific implementation of pre-configuration is not limited in this application. For example, pre-configuration may mean "what is defined in a protocol". It should be further understood that in embodiments of this application, the "protocol" may refer to a standard protocol in the communication field, for example, may include an LTE protocol, an NR protocol, and a related protocol applied to a future communication system. This is not limited in this application.

Embodiments of this application may be applied to various communication systems, for example, a global system for mobile communications (Global System of Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an advanced long term evolution (Advanced long term evolution, LTE-A) system, a new radio (New Radio, NR) system, an evolved system of the NR system, an LTE-based access to unlicensed spectrum (LTE-based access to unlicensed spectrum, LTE-U) system, an NR-based access to unlicensed spectrum (NR-based access to unlicensed spectrum, NR-U) system, a universal mobile telecommunication system (Universal Mobile Telecommunication System, UMTS), a wireless local area network (Wireless Local Area Networks, WLAN), wireless fidelity (Wireless Fidelity, WiFi), a next-generation communication system, a zero-power-consumption communication system, a cellular Internet of Things, a cellular passive Internet of Things, or another communication system.

The cellular Internet of Things is a development product of a combination of a cellular mobile communication network and an Internet of Things. The cellular passive Internet of Things is also referred to as a passive cellular Internet of Things, and is a combination of a network device and a passive terminal. In the cellular passive Internet of Things, the passive terminal may communicate with another passive terminal by using the network device; or the passive terminal may perform communication in a device-to-device (Device to Device, D2D) communication manner, and the network device only needs to send a carrier signal, that is, an energy supply signal, to supply energy to the passive terminal.

Generally, a conventional communication system supports a limited quantity of connections and is also easy to implement. However, with the development of communication technologies, a mobile communication system not only supports conventional communication, but also supports, for example, D2D communication, machine-to-machine (Machine to Machine, M2M) communication, machine type communication (Machine Type Communication, MTC), and vehicle-to-vehicle (Vehicle to Vehicle, V2V) communication. Embodiments of this application may also be applied to these communication systems.

Optionally, the communication system in embodiments of this application may be applied to a carrier aggregation (Carrier Aggregation, CA) scenario, may be applied to a dual connectivity (Dual Connectivity, DC) scenario, or may be applied to a standalone (Standalone, SA) networking scenario.

An applied spectrum is not limited in embodiments of this application. For example, embodiments of this application may be applied to a licensed spectrum, or may be applied to an unlicensed spectrum.

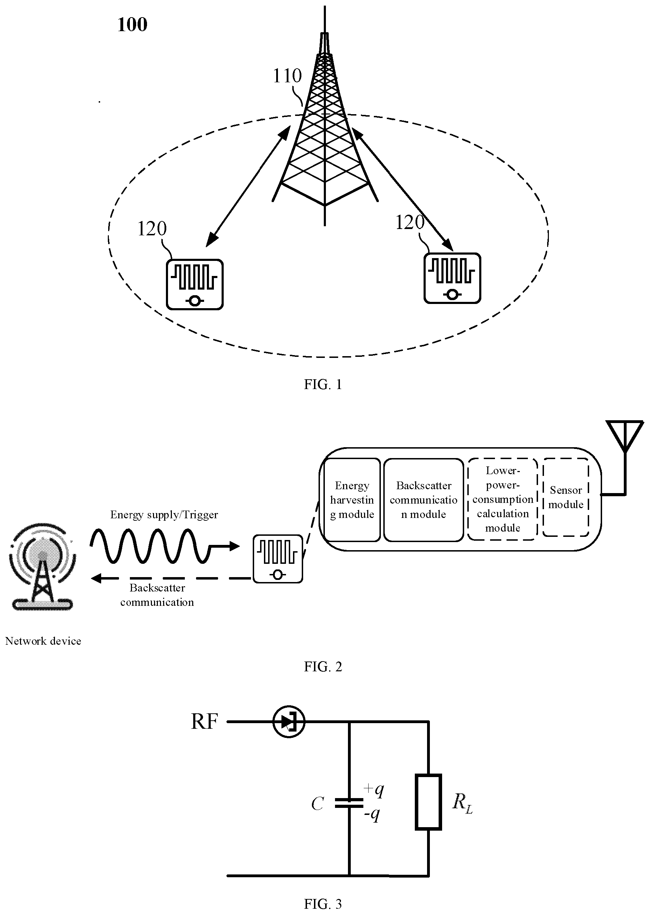

For example, a communication system 100 to which an embodiment of this application is applied is shown in FIG. 1. The communication system 100 may include a network device 110, and the network device 110 may be a device that communicates with a terminal device 120 (or referred to as a communication terminal or a terminal). The network device 110 may provide communication coverage for a specific geographic area, and may communicate with a terminal device located in the coverage area.

FIG. 1 shows one network device and two terminal devices as an example. Optionally, the communication system 100 may include a plurality of network devices, and another quantity of terminal devices may be included in a coverage range of each network device. This is not limited in embodiments of this application.

Optionally, the communication system 100 may further include another network entity such as a network controller or a mobility management entity. This is not limited in embodiments of this application.

It should be understood that in embodiments of this application, a device having a communication function in a network/system may be referred to as a communication device. The communication system 100 shown in FIG. 1 is used as an example. The communication device may include the network device 110 and the terminal device 120 that have a communication function. The network device 110 and the terminal device 120 may be specific devices described above, and details thereof are not described herein again. The communication device may further include another device in the communication system 100, for example, another network entity such as the network controller or the mobility management entity. This is not limited in embodiments of this application.

In embodiments of this application, various embodiments are described in combination with a terminal device and a network device. The network device may be a device for communicating with a mobile device. The network device may be an access point (Access Point, AP) in a WLAN, a base transceiver station (Base Transceiver Station, BTS) in GSM or CDMA; may be a NodeB (NodeB, NB) in WCDMA; or may be an evolved NodeB (Evolutional Node B, eNB or eNodeB) in LTE, a relay station or an access point, an In-Vehicle device, a wearable device, a network device (gNB) in an NR network, a network device in a future evolved PLMN network, or the like.

In embodiments of this application, the network device may provide a service for a cell. The terminal device communicates with the network device by using a transmission resource (for example, a frequency domain resource or a spectrum resource) used by the cell. The cell may be a cell corresponding to the network device (for example, a base station). The cell may belong to a macro station or may belong to a base station corresponding to a small cell (Small cell). The small cell herein may include a metro cell (Metro cell), a micro cell (Micro cell), a pico cell (Pico cell), a femto cell (Femto cell), or the like. These small cells have characteristics of a small coverage range and low transmit power, and are suitable for providing a high-rate data transmission service.

In embodiments of this application, the terminal device (user equipment, UE) may also be referred to as user equipment, an access terminal, a subscriber unit, a subscriber station, a mobile station, a mobile console, a remote station, a remote terminal, a mobile device, a user terminal, a terminal, a wireless communication device, a user agent, a user apparatus, or the like. The terminal device may be a station (STATION, ST) in a WLAN, or may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device with a wireless communication function, a computing device or another processing device connected to a wireless modem, an In-Vehicle device, a wearable device, a terminal device in a next-generation communication system such as an NR network, a terminal device in a future evolved public land mobile network (Public Land Mobile Network, PLMN), a zero-power-consumption device, or the like.

By way of example rather than limitation, in embodiments of this application, the terminal device may alternatively be a wearable device. The wearable device may also be referred to as a wearable smart device, and is a general term for wearable devices, such as glasses, gloves, watches, clothes, and shoes, that are developed by performing smart design on a daily wearing by using a wearable technology. The wearable device is a portable device that is directly worn on a body or integrated into clothes or accessories of a user. In addition to being a hardware device, the wearable device also implements a powerful function through software support, data interaction, and cloud interaction. In a broad sense, the wearable smart device includes a full-featured and large-sized device that may implement all or some functions without relying on a smartphone, for example, a smart watch or smart glasses, and a device that only focus on a specific type of application function and needs to be used in cooperation with another device such as a smartphone, for example, various smart bracelets and smart jewelries for physical sign monitoring.

It should be understood that a zero-power-consumption device may be understood as a device whose power consumption is less than preset power consumption. For example, the zero-power-consumption device includes a passive terminal, and even further includes a semi-passive terminal.

For example, the zero-power-consumption device is a radio frequency identification (Radio Frequency Identification, RFID) tag, and is a technology that implements contactless automatic transmission and identification of tag information through spatial coupling of radio frequency signals. The RFID tag is also referred to as a "radio frequency tag" or an "electronic tag". Types of electronic tags as classified based on the difference in power supply manners, may include an active electronic tag, a passive electronic tag, and a semi-passive electronic tag. The active electronic tag, also referred to as an active electronic tag, means that energy for operating of the electronic tag is provided by a battery. The active electronic tag is formed by the battery, a memory, and an antenna together, and sends information through a set frequency band before the battery is replaced, which is different from a passive radio frequency activation manner. The passive electronic tag, which is also referred to as a passive electronic tag, does not support a built-in battery. When the passive electronic tag is close to a reader/writer, the tag is located in a near field range formed through antenna radiation of the reader/writer, an antenna of the electronic tag generates an induced current through electromagnetic induction, and the induced current drives a chip circuit of the electronic tag. The chip circuit sends identification information stored in the tag to the reader/writer by using the antenna of the electronic tag. The semi-passive electronic tag, which is also referred to as a semi-active electronic tag, inherits advantages of the passive electronic tag, such as a small size, a light weight, a low price, and a long service life. When no reader/writer performs access, a built-in battery supplies power to only a few circuits in a chip. The built-in battery supplies power to an RFID chip only when a reader/writer performs access, to increase a read/write distance of the tag, thereby improving communication reliability.

An RFID system is a wireless communication system. The RFID system includes two parts: an electronic tag (TAG) and a reader/writer (Reader/Writer). The electronic tag includes a coupling component and a chip. Each electronic tag has a unique electronic code, which is placed on a target under test for the purpose of marking the target object. The reader/writer can not only read information on the electronic tag, but also write information onto the electronic tag, and provide the electronic tag with necessary energy for communication.

Zero-power-consumption communication uses energy harvesting and backscatter communication technologies. To facilitate understanding of the technical solutions in embodiments of this application, technologies related to zero-power-consumption are described.

FIG. 2 is a schematic diagram of a zero-power-consumption communication system according to this application.

As shown in FIG. 2, the zero-power-consumption communication system includes a network device and a zero-power-consumption terminal. The network device is configured to send a wireless energy supply signal and a downlink communication signal to the zero-power-consumption terminal, and receive a backscatter signal from the zero-power-consumption terminal. A basic zero-power-consumption terminal includes an energy harvesting module, a backscatter communication module, and a low-power-consumption calculation module. In addition, the zero-power-consumption terminal may further have a memory or a sensor, configured to store some basic information (such as an item identity) or obtain sensor data such as ambient temperature and ambient humidity.

Zero-power-consumption communication may also be referred to as communication based on a zero-power-consumption terminal. Key technologies of zero-power-consumption communication mainly include radio frequency energy harvesting and backscatter communication.

### 1. Energy harvesting (RF Power Harvesting)

FIG. 3 is a diagram of an energy harvesting principle according to an embodiment of this application.

As shown in FIG. 3, an energy harvesting module may include a capacitor C and a resistor R_{L}. The radio frequency energy harvesting module harvests energy of a spatial electromagnetic wave based on an electromagnetic induction principle, to thereby obtain energy required to drive a zero-power-consumption terminal to operate, for example, to drive a low-power-consumption demodulation and modulation module, a sensor, and memory reading. Therefore, the zero-power-consumption terminal does not need a conventional battery. The electromagnetic induction principle means that an induced current is generated in a closed circuit as long as magnetic flux passing through the closed circuit changes. With reference to this application, the capacitor C and the resistor R_{L} may be configured to form a closed circuit. After receiving a radio frequency (RF), the radio frequency energy harvesting module may generate an induced current and store the generated induced current in the capacitor C, to harvest the energy of the spatial electromagnetic wave.

### 2. Backscatter communication (Back Scattering)

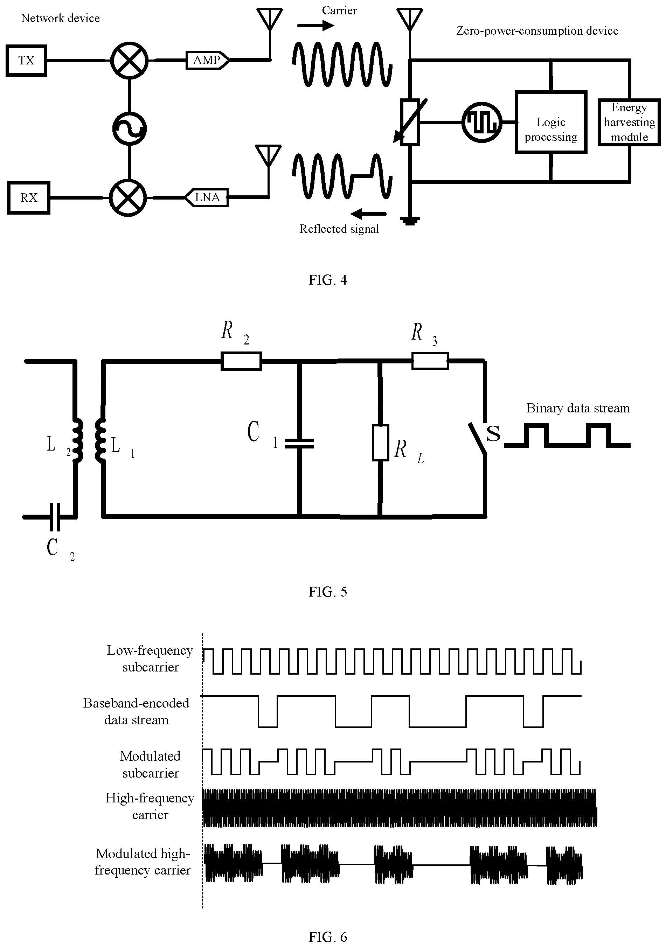

FIG. 4 is a diagram of a backscatter communication principle according to this application.

As shown in FIG. 4, when a network device serves as a transmit end (TX), the network device sends a carrier to a zero-power-consumption device by using an amplifier (AMP). Correspondingly, after receiving the carrier sent by the network, the zero-power-consumption device drives, by using energy harvested by an energy harvesting module, a logic processing module and a modulation module to process and modulate the carrier, respectively; and loads, by using a variable resistor, information that needs to be sent, and radiates a modulated reflected signal from an antenna. This information transmission process is referred to as backscatter communication. Correspondingly, when serving as a receive end (RX), the network device may receive, by using a low-noise amplifier (LNA), a reflected signal sent by the zero-power-consumption device. Further, in some possible implementations, the AMP and the LNA each may be connected to one voltage display lamp, and an emergency light may be disposed between the voltage display lamps respectively connected to the AMP and the LNA.

It should be noted that, the backscatter communication principle shown in FIG. 4 is described with reference to the zero-power-consumption device and network device. Actually, any device that has a backscatter communication function can implement backscatter communication.

Backscatter communication and load modulation functions are inseparable. In load modulation, a circuit parameter of an oscillation circuit of a zero-power-consumption terminal is adjusted and controlled based on a beat of a data stream, so that both impedance magnitude and phase of the zero-power-consumption device change accordingly, thereby completing a modulation process. A load modulation technology mainly includes two manners: resistance load modulation and capacitance load modulation.

FIG. 5 is a diagram of a circuit principle of resistance load modulation according to an embodiment of this application.

As shown in FIG. 5, in resistance load modulation, a resistor R_{L} is connected in parallel to a resistor R₃, and the resistor R_{L} may be referred to as a load modulation resistor. The resistor R_{L} is turned on or turned off based on a binary data stream. Transition between on and off states of the resistor R_{L} may cause a change in a circuit voltage. Further, the resistor R_{L} may be connected in parallel to an inductor L₁ by means of a resistor R₂, and the inductor L₁ is configured to form a resonant circuit with an inductor L₂. Based on this, Transition between on and off states of the load modulation resistor causes a change in the circuit voltage, and further causes a change in a resonant frequency of the resonant circuit. Finally, amplitude shift keying modulation (ASK) is implemented, that is, an amplitude of a backscatter signal of a zero-power-consumption terminal is adjusted so as to achieve modulation and transmission of the signal. Furthermore, the inductor L₂ may be further configured to be connected to a capacitor C₂, and the capacitor C₂ may be configured to convert a change in the resonant frequency of the resonant circuit into a signal for sending by an antenna. Similarly, in capacitance load modulation, Transition between on and off states of a capacitor C₁ may change the resonant frequency of the resonant circuit, thereby implementing frequency shift keying modulation (FSK), that is, an operating frequency of the backscatter signal of the zero-power-consumption terminal is adjusted so as to achieve modulation and transmission of the signal.

The zero-power-consumption terminal performs information modulation on an incoming signal through load modulation to implement a backscatter communication process. Therefore, the zero-power-consumption terminal has significant advantages:
1. The terminal device does not actively transmit a signal, and implements backscatter communication by modulating an incoming signal.
2. The terminal device does not rely on a conventional active power amplification transmitter, and uses a low-power-consumption calculation unit, which greatly reduces hardware complexity.
3. Battery-free communication may be implemented in combination with energy harvesting.

It should be understood that, the foregoing terminal device may be a zero-power-consumption device (such as a passive terminal or even a semi-passive terminal), and the terminal device may even be a non-zero-power-consumption device, such as a common terminal, but the common terminal may perform backscatter communication in some cases.

In specific implementation, data transmitted by the terminal device may represent binary "1" and "0" by using different forms of codes. A radio frequency identification system usually uses one of the following encoding methods: non-return-to-zero (NRZ) encoding, Manchester (Manchester) encoding, unipolar return-to-zero (Unipolar RZ) encoding, differential binary phase (DBP) encoding, Miller (Miller) encoding, or differential encoding. Generally, 0 and 1 are represented by using different pulse signals.

For example, based on energy sources and usage modes of zero-power-consumption terminals, they may be classified into the following types:

### 1. Passive zero-power-consumption terminal

A battery does not need to be installed inside the zero-power-consumption terminal. When the zero-power-consumption terminal is close to a network device (for example, a reader/writer of an RFID system), the zero-power-consumption terminal is located in a near field range formed through antenna radiation of the network device. Therefore, an antenna of the zero-power-consumption terminal generates an induced current through electromagnetic induction, and the induced current drives a low-power-consumption chip circuit of the zero-power-consumption terminal, so as to achieve demodulation of a forward link signal, modulation of a backward link signal, and so on. For a backscatter link, the zero-power-consumption terminal transmits a signal in a backscatter implementation.

Therefore, it may be learned that the passive zero-power-consumption terminal does not require a built-in battery to drive neither a forward link nor a reverse link, and is a true zero-power-consumption terminal. The passive zero-power-consumption terminal requires no battery, and both a radio frequency circuit and a baseband circuit are very simple. For example, components such as a low-noise amplifier (LNA), a power amplifier (PA), a crystal oscillator, and an ADC are not required. Therefore, the passive zero-power-consumption terminal has many advantages such as a small size, a light weight, a very cheap price, and a long service life.

### 2. Half-passive zero-power-consumption terminal

No conventional battery is installed in the half-passive zero-power-consumption terminal, but radio wave energy may be harvested by using an RF energy harvesting module, and the harvested energy is stored in an energy storage unit (such as a capacitor). After obtaining the energy, the energy storage unit may drive a low-power-consumption chip circuit of the zero-power-consumption terminal, so as to achieve demodulation of a forward link signal, modulation of a backward link signal, and so on. For a backscatter link, the zero-power-consumption terminal transmits a signal by means of a backscatter implementation.

Therefore, it may be learned that the half-passive zero-power-consumption terminal does not require a built-in battery to drive neither a forward link nor a reverse link. Although the energy stored in the capacitor is used for operation, the energy comes from the radio energy harvested by the energy harvesting module. Therefore, the half-passive zero-power-consumption terminal is also a true zero-power-consumption terminal. The half-passive zero-power-consumption terminal inherits many advantages of the passive zero-power-consumption terminal, and therefore has many advantages such as a small size, a light weight, a very cheap price, and a long service life.

### 3. Active zero-power-consumption terminal

In some scenarios, a zero-power-consumption terminal as used may alternatively be an active zero-power-consumption terminal, and a battery may be built in this type of terminal. The battery is configured to drive a low-power-consumption chip circuit of the zero-power-consumption terminal, so as to achieve demodulation of a forward link signal, modulation of a backward link signal, and so on. However, for a backscatter link, the zero-power-consumption terminal transmits a signal by means of a backscatter implementation. Therefore, zero-power-consumption of this type of terminal is mainly reflected in the following: signal transmission in a reverse link does not require power of the terminal itself, but is in a backscatter manner. In other words, the active zero-power-consumption terminal supplies power to an RFID chip by using the built-in battery, to increase a read/write distance of the zero-power-consumption terminal, thereby improving communication reliability. Therefore, the active zero-power-consumption terminal is applied to some scenarios in which a high requirement is imposed in terms of communication distance and read delay.

For example, the zero-power-consumption terminal may harvest energy based on an energy supply signal.

Optionally, in terms of a carrier for the energy supply signal, the energy supply signal may be from a base station, a smartphone, a smart gateway, a charging station, a micro base station, or the like.

Optionally, in terms of frequency band, the energy supply signal may be a low-frequency signal, an intermediate-frequency signal, a high-frequency signal, or the like.

Optionally, in terms of waveform, the energy supply signal may be a sine wave, a square wave, a triangular wave, a pulse, a rectangular wave, or the like.

Optionally, the energy supply signal may be a continuous wave, or may be a discontinuous wave (that is, a period of time of interruption is allowed).

Optionally, the energy supply signal may be a signal as specified in a 3GPP standard, for example, an SRS, a PUSCH, a PRACH, a PUCCH, a PDCCH, a PDSCH, or a PBCH.

It should be noted that, because a carrier signal sent by the foregoing network device may also be used to supply energy to a zero-power-consumption device, the carrier signal may also be referred to as the energy supply signal.

For example, a zero-power-consumption terminal may perform backscatter communication based on a received trigger signal. Optionally, the trigger signal may be used to schedule or trigger the zero-power-consumption terminal to perform backscatter communication. Optionally, the trigger signal carries scheduling information of the network device, or the trigger signal is scheduling signalling or a scheduling signal sent by the network device.

Optionally, in terms of a carrier for the energy supply signal, the trigger signal may be from a base station, a smartphone, a smart gateway, or the like.

Optionally, in terms of frequency band, the trigger signal may be a low-frequency signal, an intermediate-frequency signal, a high-frequency signal, or the like.

Optionally, in terms of waveform, the trigger signal may be a sine wave, a square wave, a triangular wave, a pulse, a rectangular wave, or the like.

Optionally, the trigger signal may be a continuous wave, or may be a discontinuous wave (that is, a period of time of interruption is allowed).

Optionally, the trigger signal may be a signal such as SRS, PUSCH, PRACH, PUCCH, PDCCH, PDSCH, or PBCH, as specified in a 3GPP standard,; or may be a new signal.

It should be noted that, the energy supply signal and the trigger signal may be the same signal, or may be two independent signals. This is not specifically limited in this application.

For example, in a cellular network, because a zero-power-consumption device has no battery to supply power, a network device needs to provide an energy supply signal, which is used by the zero-power-consumption device for obtaining energy, to perform a corresponding communication process. A signal for supplying energy (that is, the energy supply signal) and a signal for transmitting information (that is, the trigger signal) may be two signals or may be the same signal. For another example, in an RFID technology, the energy supply signal and the trigger signal may be the same signal, and in a cellular passive Internet of Things technology, the energy supply signal and the trigger signal may be two independent signals. The two signals may not be sent in one frequency band. For example, the zero-power-consumption device may perform a corresponding communication process, such as measurement, channel/signal reception, channel/signal transmission, or the like, after the zero-power-consumption device harvests and obtains energy from the energy supply signal transmitted continuously or intermittently by the network device in a certain frequency band.

When transmitting a signal, the zero-power-consumption device may transmit the signal on a preset resource. For example, different resources may be employed for different user IDs or different types of users. The zero-power-consumption device may alternatively transmit the signal based on scheduling by the network device. That is, the zero-power-consumption device may receive the trigger signal, and send a signal based on the scheduling by the trigger signal.

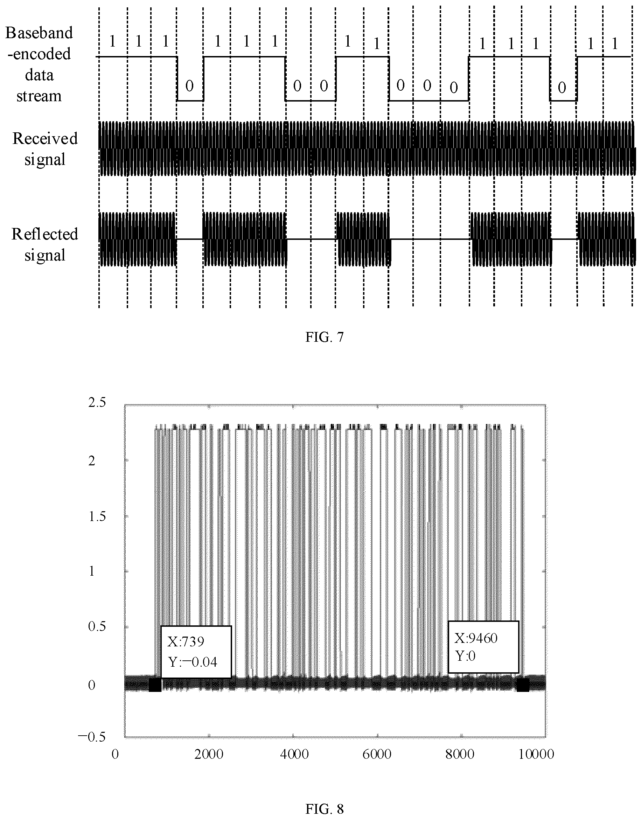

Because a zero-power-consumption device cannot generate a high-frequency signal, a subcarrier modulation scheme or an on-off keying (On-Off Keying, OOK) modulation scheme is used in a reverse link to modulate an encoded baseband-encoded data stream. FIG. 6 is a schematic diagram of a subcarrier modulation scheme according to an embodiment of this application. As shown in FIG. 6, in the subcarrier modulation scheme, a zero-power-consumption device firstly generates a low-frequency subcarrier, and then modulates an encoded baseband-encoded data stream onto the low-frequency subcarrier to obtain a modulated subcarrier. Then, the zero-power-consumption device modulates the modulated subcarrier onto a high-frequency carrier through load modulation, to obtain a modulated high-frequency subcarrier. FIG. 7 is a schematic diagram of an OOK modulation scheme according to an embodiment of this application. As shown in FIG. 7, in the OOK modulation scheme, a zero-power-consumption device modulates an encoded baseband-encoded data stream onto a signal received by the zero-power-consumption device, to obtain a reflected signal, and sends the transmitted signal to a network device. The signal received by the zero-power-consumption device may be a high-frequency signal or a specific carrier signal.

As a quantity of application requirements in the 5G industry increases, there are increasingly more types of connected objects and application scenarios, and a higher requirement is also imposed on a price and power consumption of a communication terminal. Application of a battery-free and low-cost passive Internet of Things device becomes a key technology of a cellular Internet of Things, and the device can enrich types and quantities of terminals in the network, thereby truly achieving the Internet of Everything. The passive Internet of Things device may be based on an existing zero-power-consumption device, such as a radio frequency identification (Radio Frequency Identification, RFID) technology, and extends on this basis to be applicable to the cellular Internet of Things.

In actual network deployment, a technical bottleneck with which a passive zero-power-consumption communication technology is faced is a limited coverage distance of a forward link, and a main reason is that a communication distance of the forward link is limited by signal strength of a wireless signal that reaches a zero-power-consumption terminal. Based on the foregoing implementation process, generally, the zero-power-consumption terminal needs to consume 10 microwatts (uw) of power to drive a low-power-consumption circuit. This means that power of the signal reaching the zero-power-consumption terminal needs to be at least -20 dBm. Subject to a requirement of radio supervision, transmit power of a network device usually cannot be excessively large. For example, maximum transmit power is 30 dBm in an ISM frequency band in which RFID operates. Therefore, considering a radio propagation loss in space, a transmission distance of the passive zero-power-consumption terminal usually ranges from 10m to tens of meters.

However, the half-passive zero-power-consumption terminal has a potential to significantly extend a communication distance since the half-passive zero-power-consumption terminal can harvest radio waves by using an RF energy harvesting module, and can continuously obtain radio energy and store the same in an energy storage unit. After obtaining enough energy, the energy storage unit may drive the low-power-consumption circuit to operate to perform operations of demodulating a forward link signal, modulating a reverse link signal, and so on. Therefore, in this case, the half-passive zero-power-consumption terminal is equivalent to an active terminal, and downlink coverage of the half-passive zero-power-consumption terminal depends on sensitivity (which is usually far lower than an RF energy harvesting threshold) of a receiver of a downlink signal. Based on the state of the art, the energy harvesting module may harvest energy when strength of a received radio signal is not less than -30 dBm, and input electric energy to the energy storage unit. Therefore, forward link coverage of the half-passive zero-power-consumption terminal depends on the RF energy harvesting threshold (such as -30 dBm). Compared with that for the passive zero-power-consumption terminal, strength of a received radio signal is relaxed from -20 dBm to -30 dBm. Therefore, a link budget gain of 10 dB can be obtained, thereby enlarging downlink coverage by more than 3 times. However, while the forward link coverage is enlarged, the half-passive zero-power-consumption terminal also is faced with a problem of a decrease in charging efficiency. As strength of a received signal decreases, energy that can bey harvested and stored by the energy harvesting module greatly decreases. For example, when strength of a received signal is -30 dBm, that is, 1 microwatt, energy that can be harvested and stored is far less than 1 microwatt (energy harvesting efficiency is greatly reduced).

In another aspect, as described above, the low-power-consumption circuit of the zero-power-consumption terminal may need to consume an average power of 10 microwatts (µw).

It may be learned through combination of the two aspects that, the zero-power-consumption terminal needs to harvest energy, and when the zero-power-consumption terminal is relatively far from the network device, a speed of obtaining and storing energy through energy harvesting is very slow. In addition, for a zero-power-consumption terminal that is close to the network device, even if the zero-power-consumption terminal performs backscatter communication at a high rate, data transmission performance of the zero-power-consumption terminal can be ensured. However, for a zero-power-consumption terminal that is far away from the network device, if the zero-power-consumption terminal also performs backscatter communication at a high rate, a block error rate (block error rate, BLER) is excessively large. As a result, the number of times of hybrid automatic repeat request (Hybrid Automatic Repeat Request, HARQ) transmission is increased, and data transmission performance is ultimately reduced.

In addition, a clock circuit of the zero-power-consumption terminal usually employs a simplified circuit of a resistance-capacitance (RC) oscillator. However, errors such as a timing error, a frequency error, and a phase error for the simplified circuit of the RC oscillator are relatively large.

FIG. 8 is a schematic diagram obtained by measuring a timing error value for a zero-power-consumption circuit according to an embodiment of this application.

As shown in FIG. 8, it is assumed that a total of 176 bits of data is sent, and a terminal device continuously harvests electrical levels of 10000 sampling points (sampling period) based on a sampling period (Sampling Period) of 2e-8. To be specific, a horizontal coordinate represents a sampling point, and a vertical coordinate represents a voltage. An index of a first sampling point is 739, and an index of a second sampling point is 9460. To be specific, when X is 739, it represents a sample index (sample index) corresponding to a start location of the 176-bit data; and correspondingly; when X is 9460, it represents a sample index corresponding to an end location of the 176-bit data. Based on this, transmission time (Sampling time) of the 176-bit data may be calculated by using the number of sampling points and the sampling period (sampling period), and transmission time of each bit of data can be further obtained. Further, calculated transmission time (Time per bit) of each bit of data is compared with theoretical transmission time (Theoretical time per bit) of each bit of data to obtain a corresponding timing error. Optionally, the theoretical transmission time of each bit of data may be 1 us.

For example, parameters sampled in FIG. 8 and parameters obtained through calculation are shown in Table 1.

**Table 1**

| | |
|---|---|
| Sampling period | 2e-8 (s) |
| Number of bits | 176 |
| Sampling time | (9460-739)*2e-8 = 1.7442e-4 |
| Time per bit of data | 1.7442e-4/176 = 9.9102e-7 (s) |
| Theoretical time per bit of data | 1 us |
| Error (error) | 8.98‰ |

As shown in Table 1, corresponding sampling point time (Sampling time) of the 176-bit data is: (9460-739)*2e-8 = 1.7442e-4. Further, the following transmission time (Time per bit) of each bit of data may be obtained through calculation: 1.7442e-4/176 = 9.9102e-7 (s). Correspondingly, a timing offset for the simplified circuit of the RC oscillator is (1us - 9.9102e-7)(s); and correspondingly, an average timing error for the RC oscillator is about 0.89%.

In some embodiments, a microcontroller may be used to further correct a timing error for the zero-power-consumption device, but the timing error is still much greater than an error for a crystal oscillator circuit.

In view of this, embodiments of this application provide a data transmission method and a communication device, so that a zero-power-consumption terminal can be applied to a cellular Internet of Things to enrich types and quantities of linked terminals in the network, thereby truly achieving the Internet of Everything, and further helping improving data transmission performance. It should be noted that the solution provided in this application is not only applicable to a zero-power-consumption scenario, but also applicable to a non-zero-power-consumption scenario, that is, applicable to a process of data transmission between a terminal device and a network device, for example, applicable to a data sending process of the terminal device or a data receiving process of the network device.

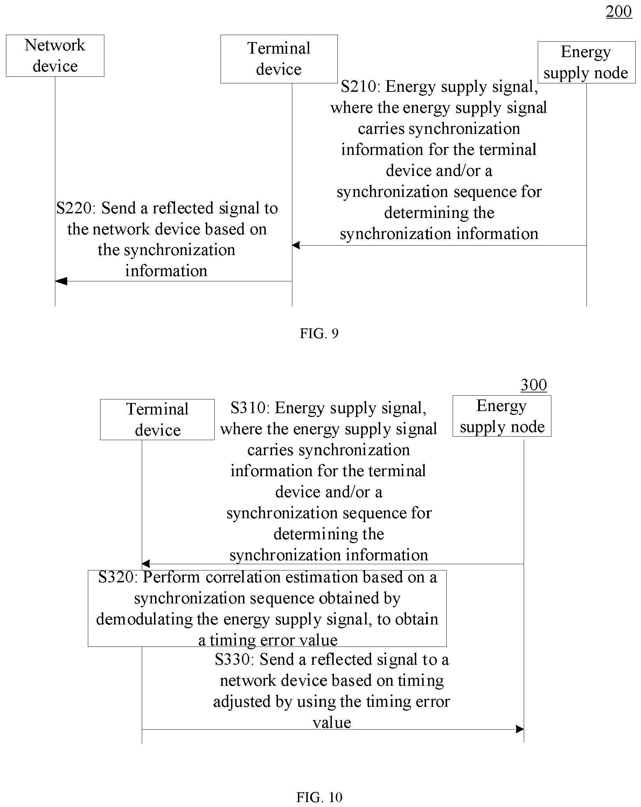

FIG. 9 is a schematic flowchart of a data transmission method 200 according to an embodiment of this application. The method 200 may be interactively performed by a communication device, an energy supply node, and a network device. For example, the terminal device and the network device may be the terminal device 120 or the network device 110 shown in FIG. 1, respectively. For another example, the energy supply node may be the network device 110 shown in FIG. 1, and the terminal device may be a zero-power-consumption terminal. It should be noted that, the network device and the energy supply node in this embodiment may be a same device, or may be two independent devices. This is not specifically limited in this application. For example, the energy supply node is the network device and the trigger signal is carried in the energy supply signal. For another example, the energy supply node is a device other than the network device and the trigger signal is independent of the energy supply signal. For example, when the energy supply node and the network device are two independent devices, an interface for coordinating a link may be added between the network device and the energy supply node.

As shown in FIG. 9, the method 200 may include the following steps.

S210: The terminal device receives an energy supply signal, where the energy supply signal carries synchronization information for the terminal device and/or a synchronization sequence for determining the synchronization information.

S220: The terminal device sends a reflected signal to the network device based on the synchronization information.

For example, the terminal device performs energy harvesting based on the received energy supply signal, and demodulates the synchronization information or the synchronization sequence carried in the energy supply signal. After obtaining the synchronization information, the terminal device sends the reflected signal to the network device based on the synchronization information. In other words, the energy supply signal in this application is used to provide both energy and the synchronization information, that is, the terminal may obtain the synchronization information in the energy supply signal while receiving the energy supply signal. Optionally, the synchronization information is used for synchronization adjustment. For example, the synchronization information may be used for timing synchronization adjustment and/or frequency synchronization adjustment.

In this embodiment, the synchronization information for the terminal device and/or the synchronization sequence for determining the synchronization information are/is carried in the energy supply signal, so that the terminal device can send the reflected signal to the network device based on the synchronization information. In this way, a zero-power-consumption terminal can be applied to a cellular Internet of Things to enrich types and quantities of linked terminals in the network, thereby truly achieving the Internet of Everything. Further, a synchronization error for the terminal device can be reduced, so that the terminal device can receive/send data by using accurate timing or an accurate frequency, thereby improving system performance.

In addition, in this application, the energy supply signal and a synchronization signal are designed as the same signal, which can save time-frequency domain resources.

It should be noted that a specific implementation of the energy supply signal is not limited in this application.

For example, the energy supply signal may be a constant amplitude continuous wave signal, including but not limited to a sine/cosine wave signal, a sawtooth wave signal, a square wave signal, and the like. For another example, the energy supply signal may be an energy supply signal that is continuously sent. For another example, the energy supply signal may be a modulated continuous wave signal, such as a signal obtained through amplitude modulation or through modulation in another manner. Energy harvested by the terminal device based on the energy supply signal may be used to implement functions of demodulating the synchronization information, reflecting the energy supply signal, performing measurement, and the like.

In addition, a modulation scheme for modulating the energy supply signal is not limited in this application.

For example, the energy supply signal may be modulated through subcarrier modulation. Subcarrier modulation means that a signal is firstly modulated onto a carrier 1 and then another modulation is performed again, to be specific, another carrier 2 with a higher frequency is modulated by using a modulated carrier for the carrier 1. Subcarrier modulation is a modulation scheme used in an RFID system. Specifically, in subcarrier modulation, a low-frequency subcarrier is firstly modulated by using a baseband-encoded data signal, and a modulated subcarrier signal is used to switch load resistance. Then, secondary modulation is performed on the subcarrier by using a modulation scheme such as ASK, FSK, or PSK.

In some embodiments, S220 may include:
in a case that the synchronization information includes a timing error value for the terminal device, sending, by the terminal device, the reflected signal and/or a frequency error value to the network device based on timing adjusted by using the timing error value; and/or in a case that the synchronization information includes a frequency error value for the terminal device, sending, by the terminal device, the reflected signal to the network device based on a frequency adjusted by using the frequency error value.

Given that an operating principle of a zero-power-consumption terminal works based on radio electromagnetic/inductive coupling, and an oscillator is needed to provide and maintain a clock inside the terminal, it is difficult for the internal oscillator to ensure an accurate clock from a simplification perspective. As a result, it is difficult to compensate for a timing error and/or a frequency error between the terminal device and the network device through timing adjustment, and accumulation of the timing error and/or the frequency error may lead to a failure of normal communication. In this embodiment, the synchronization information is carried in the energy supply signal, and the synchronization information is designed to include the timing error value for the terminal device and/or include the frequency error value for the terminal device, which is equivalent to that the energy supply signal may be directly used to compensate for the timing error and/or the frequency error for the terminal device, so that the terminal device can receive/send data by using accurate timing or an accurate frequency, thereby improving system performance.

In addition, the synchronization information is designed to include the timing error value for the terminal device and/or include the frequency error value for the terminal device, which is equivalent to controlling the timing error and/or the frequency error in a closed-loop manner, so as to prevent diffusion or accumulation of the error, thereby improving system performance.

For example, the timing error value for the terminal device refers to an offset relative to timing used by the terminal device, and the frequency error value for the terminal device may refer to an offset relative to a frequency used by the terminal device. Certainly, in another alternative embodiment, the timing error value may be referred to similar terms such as a timing signature, and the frequency error may be referred to as similar terms such as a frequency offset. This is not specifically limited in this application.

Certainly, in another alternative embodiment, the timing error value for the terminal device may be referred to as a compensation amount for timing used by the terminal device, and the frequency error value for the terminal device may be referred to as a compensation amount for a frequency used by the terminal device. Optionally, the timing error value for the terminal device and/or the frequency error value including the terminal device may be a positive number or a negative number. This is not specifically limited in this application.

In some embodiments, the method 200 may further include:
in a case that the energy supply signal carries the synchronization sequence, demodulating, by the terminal device, the energy supply signal to obtain the synchronization sequence; and
obtaining, by the terminal device, the synchronization information based on an estimation result obtained by performing correlation estimation on the synchronization sequence.

For example, the terminal device may obtain the timing error value for the terminal device and/or the frequency error value including the terminal device based on the estimation result obtained by performing correlation estimation on the synchronization sequence.

It should be understood that, a process in which the terminal device performs correlation estimation on the synchronization sequence to obtain the estimation result may also be understood as a process in which the synchronization sequence is measured. In other words, the terminal device may measure the synchronization sequence to obtain the timing error value for the terminal device and/or the frequency error value including the terminal device.

In some embodiments, the terminal device performs correlation estimation on the synchronization sequence and a local sequence generated by the terminal device, to obtain first timing and/or a first frequency; and the terminal device determines, as the synchronization information, an offset value between the first timing and timing used by the terminal device and/or an offset value between the first frequency and a transmit frequency used by the terminal device.

For example, the terminal device may obtain a correlation peak location by performing correlation estimation on the synchronization sequence and the local sequence, and further obtain the first timing based on the correlation peak location; and the terminal device determines, as the timing error value, the offset value between the first timing and the timing used by the terminal device.

For example, the terminal device may obtain a correlation peak location by performing correlation estimation on the synchronization sequence and the local sequence, and further obtain the first frequency based on the correlation peak location; and the terminal device determines, as the frequency error value, the offset value between the first frequency and the transmit frequency used by the terminal device.

It should be understood that, a correlation estimation algorithm and an implementation of determining timing and/or a frequency by using a correlation peak location are not specifically limited in this application. In other words, in this application, the first timing and/or the first frequency may be calculated by using any known correlation estimation algorithm and any known method for determining timing/or a frequency by using a correlation peak location. Details are not described herein.

As shown in FIG. 10, the method 300 may include the following steps.

FIG. 10 is a schematic flowchart of a wireless communication method according to an embodiment of this application.

S310: The terminal device receives an energy supply signal, where the energy supply signal carries synchronization information for the terminal device and/or a synchronization sequence for determining the synchronization information.

S320: The terminal device performs correlation estimation based on a synchronization sequence obtained by demodulating the energy supply signal, to obtain a timing error value. For example, the terminal device may obtain a correlation peak location by performing correlation estimation on the synchronization sequence and the local sequence, and further obtain the first timing based on the correlation peak location; and the terminal device determines, as the timing error value, an offset value between the first timing and timing used by the terminal device. Certainly, in another alternative embodiment, the terminal device may obtain a frequency error value by performing correlation estimation based on the synchronization sequence obtained by demodulating the energy supply signal. For example, the terminal device may obtain a correlation peak location by performing correlation estimation on the synchronization sequence and the local sequence, and further obtain a first frequency based on the correlation peak location; and the terminal device determines, as the frequency error value, an offset value between the first frequency and a transmit frequency used by the terminal device.

S330: The terminal device sends a reflected signal to a network device based on the synchronization information.

For example, the terminal device performs synchronization adjustment based on the synchronization information. For example, in a case that the synchronization information includes the timing error value for the terminal device, the terminal device sends the reflected signal and/or a frequency error value to the network device based on timing adjusted by using the timing error value; and/or in a case that the synchronization information includes the frequency error value for the terminal device, the terminal device sends the reflected signal to the network device based on a frequency adjusted by using the frequency error value.

In some embodiments, the method 200 may further include:
in a case that the energy supply signal carries the synchronization information, demodulating, by the terminal device, the energy supply signal to obtain the synchronization information.

For example, the terminal device demodulates the energy supply signal to obtain the timing error value for the terminal device and/or the frequency error value including the terminal device. In this embodiment, this is equivalent to that a timing adjustment command is directly carried in the energy supply signal. The timing adjustment command is used to indicate the timing error value for the terminal device and/or the frequency error value including the terminal device. Correspondingly, after obtaining the adjustment command, the terminal device may send the reflected signal based on timing or a frequency adjusted by using the adjustment command.

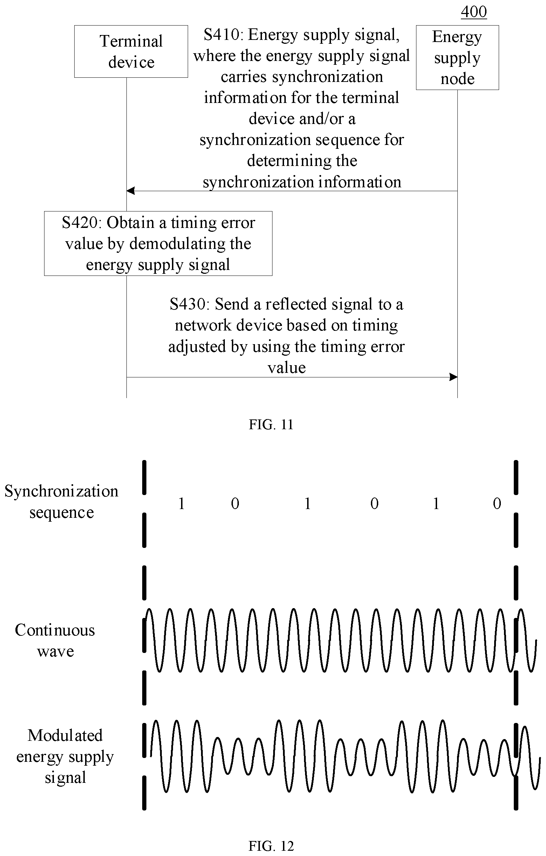

As shown in FIG. 11, the method 400 may include the following steps.

FIG. 11 is a schematic flowchart of a wireless communication method according to an embodiment of this application.

S410: The terminal device receives an energy supply signal, where the energy supply signal carries synchronization information for the terminal device and/or a synchronization sequence for determining the synchronization information.

S420: The terminal device obtains a timing error value by demodulating the energy supply signal.

Certainly, in another alternative embodiment, the terminal device may obtain a frequency error value by demodulating the energy supply signal.

S430: The terminal device sends a reflected signal to a network device based on the synchronization information.

For example, the terminal device performs synchronization adjustment based on the synchronization information. For example, in a case that the synchronization information includes the timing error value for the terminal device, the terminal device sends the reflected signal and/or a frequency error value to the network device based on timing adjusted by using the timing error value; and/or in a case that the synchronization information includes the frequency error value for the terminal device, the terminal device sends the reflected signal to the network device based on a frequency adjusted by using the frequency error value.

In some embodiments, in a case that the energy supply signal further carries the synchronization sequence, the reflected signal carries the synchronization sequence.

In some embodiments, the synchronization sequence includes at least one of the following sequences: a pseudorandom sequence (Pseudorandom Noise, PN), an M sequence, a Gold sequence, a discrete Fourier transform (Discrete Fourier Transform, DFT) sequence, or a constant amplitude zero auto-correlation (Const Amplitude Zero Auto-Corelation, CAZAC) sequence.

For example, the pseudorandom sequence (Pseudorandom Noise, PN) means that this sequence is highly random and has a good statistical characteristic but is not a real random number, which is reflected in a periodicity of the PN sequence. The PN sequence is implemented by using a linear feedback shift register, and the number of stages of the shift register determines a length of a periodicity of the shift register. The PN sequence may be divided into a long PN code (long code) and a short PN code (short code). The Gold sequence is a code sequence based on the M sequence, which has excellent auto-correlation and cross-correlation characteristics, and generates a large quantity of sequences. Constant amplitude zero auto-correlation (Const Amplitude Zero Auto-Corelation, CAZAC) sequence: The CAZAC sequence includes but is not limited to a ZC (Zadoff off) sequence, a Frank sequence, a Golomb multiphase sequence, and a Chirp sequence. For example, a generator polynomial of the M sequence is x(n + 8) = (x(n + 7) + x(n + 3) + x(n)) mod2, where x(n) represents a value generated by a nth cyclic shifter. Certainly, in another alternative embodiment, another form of polynomial may be used as the generator polynomial of the M sequence. This is not specifically limited in this application.

In some embodiments, auto-correlation of the synchronization sequence is greater than or equal to a first threshold.

In some embodiments, the energy supply signal is a signal obtained by modulating the synchronization information by using at least one of the following modulation schemes: amplitude modulation, frequency modulation, or phase modulation.

In some embodiments, the energy supply signal is a signal obtained by modulating the synchronization information or the synchronization sequence onto a continuous wave.

FIG. 12 is a schematic diagram of an energy supply signal obtained by modulating a synchronization sequence onto a continuous wave according to an embodiment of this application.

As shown in FIG. 12, it is assumed that the synchronization sequence is 101010. In this case, the energy supply signal may be a signal obtained by modulating the synchronization sequence through amplitude modulation. For example, 0 is modulated into a low level and 1 is modulated into a high level to obtain a signal obtained by modulating the synchronization sequence onto the continuous wave.

In some embodiments, the energy supply signal further carries trigger information, and the trigger information includes at least one of the following information:
information used to trigger the terminal device to receive downlink data;
information used to trigger the terminal device to send the reflected signal; or
information used to trigger the terminal device to access a network.

In this embodiment, the energy supply signal may be further used to modulate the trigger information. In other words, in addition to supplying energy to the terminal device, the energy supply signal may be further used to modulate the synchronization information and the trigger information.

In some embodiments, a frequency used by the energy supply signal is the same as a frequency used by the reflected signal.

In some embodiments, a sending node of the energy supply signal is different from a receiving node of the reflected signal.

For example, when the frequency used by the energy supply signal is the same as the frequency used by the reflected signal, the sending node of the energy supply signal is different from the receiving node of the reflected signal. In this embodiment, when the terminal device uses same uplink and downlink frequencies, the sending node of the energy supply signal is designed to be different from the receiving node of the reflected signal, so that an uplink-downlink interference problem can be resolved, thereby improving utilization of uplink and downlink spectrum resources.

In some embodiments, there is an offset between a frequency used by the energy supply signal and a frequency used by the reflected signal.

The foregoing describes in detail the preferred implementations of this application with reference to the accompanying drawings. However, this application is not limited to specific details in the foregoing implementations. Within the scope of the technical concepts of this application, various simple variations may be implemented to the technical solutions in this application, and these simple variations are all within the protection scope of this application. For example, specific technical features described in the foregoing specific implementations may be combined in any suitable manner in the case of no conflict. To avoid unnecessary repetition, various possible combination manners are not described in this application. For another example, any combination may alternatively be performed between different implementations of this application, provided that the combination is not contrary to the idea of this application, and the combination shall also be considered as the content disclosed in this application.

It should be further understood that, in the method embodiments of this application, sequence numbers of the foregoing processes do not mean execution sequences. The execution sequences of the processes shall be determined based on functions and internal logic of the processes, and shall not be construed as any limitation on the implementation processes of embodiments of this application. In addition, in embodiments of this application, the terms "downlink" and "uplink" are used to indicate a transmission direction of a signal or data, where "downlink" indicates that a transmission direction of a signal or data is a first direction from a station to a user equipment in a cell, and "uplink" indicates that a transmission direction of a signal or data is a second direction from user equipment in a cell to a station. For example, a "downlink signal" indicates that a transmission direction of the signal is the first direction. In addition, in embodiments of this application, the term "and/or" is merely an association relationship that describes associated objects, and indicates that there may be three relationships. Specifically, "A and/or B" may indicate the following three cases: Only A exists, both A and B exist, and only B exists. In addition, the character "/" in this specification usually indicates that there is an "or" relationship between associated objects.

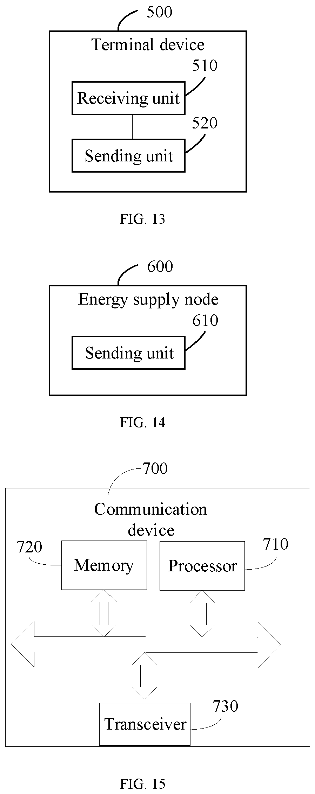

The method embodiments of this application are described in detail above with reference to FIG. 1 to FIG. 12. Apparatus embodiments of this application are described in detail below with reference to FIG. 13 to FIG. 16.

FIG. 13 is a schematic block diagram of a terminal device 500 according to an embodiment of this application.

As shown in FIG. 13, the terminal device 500 may include:
a receiving unit 510, configured to receive an energy supply signal, where the energy supply signal carries synchronization information for the terminal device and/or a synchronization sequence for determining the synchronization information; and
a sending unit 520, configured to send a reflected signal to a network device based on the synchronization information.

In some embodiments, the sending unit 520 is specifically configured to:
in a case that the synchronization information includes a timing error value for the terminal device, send the reflected signal and/or a frequency error value to the network device based on timing adjusted by using the timing error value; and/or
in a case that the synchronization information includes a frequency error value for the terminal device, send the reflected signal to the network device based on a frequency adjusted by using the frequency error value.

In some embodiments, the receiving unit 510 is further configured to:
in a case that the energy supply signal carries the synchronization sequence, demodulate the energy supply signal to obtain the synchronization sequence; and
obtain the synchronization information based on an estimation result obtained by performing correlation estimation on the synchronization sequence.

In some embodiments, the sending unit 520 is specifically configured to:
perform correlation estimation on the synchronization sequence and a local sequence generated by the terminal device, to obtain first timing and/or a first frequency; and
determine, as the synchronization information, an offset value between the first timing and timing used by the terminal device and/or an offset value between the first frequency and a transmit frequency used by the terminal device.

In some embodiments, the receiving unit 510 is further configured to:
in a case that the energy supply signal carries the synchronization information, demodulate the energy supply signal to obtain the synchronization information.

In some embodiments, in a case that the energy supply signal further carries the synchronization sequence, the reflected signal carries the synchronization sequence.

In some embodiments, the synchronization sequence includes at least one of the following sequences: a pseudorandom sequence PN sequence, an M sequence, and a Gold sequence, a discrete Fourier transform DFT sequence, or a constant amplitude zero auto-correlation CAZAC sequence.

In some embodiments, auto-correlation of the synchronization sequence is greater than or equal to a first threshold.

In some embodiments, the energy supply signal is a signal obtained by modulating the synchronization information by using at least one of the following modulation schemes:
amplitude modulation, frequency modulation, or phase modulation.

In some embodiments, the energy supply signal is a signal obtained by modulating the synchronization information or the synchronization sequence onto a continuous wave.

In some embodiments, the energy supply signal further carries trigger information, and the trigger information includes at least one of the following information:
information used to trigger the terminal device to receive downlink data;
information used to trigger the terminal device to send the reflected signal; or
information used to trigger the terminal device to access a network.

In some embodiments, a frequency used by the energy supply signal is the same as a frequency used by the reflected signal.

In some embodiments, a sending node of the energy supply signal is different from a receiving node of the reflected signal.

In some embodiments, there is an offset between a frequency used by the energy supply signal and a frequency used by the reflected signal.

It should be understood that the apparatus embodiments may correspond to the method embodiments. For similar descriptions, reference may be made to the method embodiments. Specifically, the terminal device 500 shown in FIG. 13 may correspond to a corresponding body that performs the methods provided in embodiments of this application, and the foregoing and other operations and/or functions of the units in the terminal device 500 are respectively intended to implement corresponding procedures in the methods provided in embodiments of this application. For brevity, details are not described herein.

FIG. 14 is a schematic block diagram of an energy supply node 600 according to an embodiment of this application.

As shown in FIG. 14, the energy supply node 600 may include:
a sending unit 610, configured to send an energy supply signal to a terminal device, where the energy supply signal carries synchronization information for the terminal device and/or a synchronization sequence for determining the synchronization information, and the synchronization information is used by the terminal device for sending a reflected signal.

In some embodiments, the synchronization information includes a timing error value for the terminal device, and/or the synchronization information includes a frequency error value for the terminal device.

In some embodiments, in a case that the energy supply signal further carries the synchronization sequence, the reflected signal carries the synchronization sequence.

In some embodiments, the synchronization sequence includes at least one of the following sequences: a pseudorandom sequence PN sequence, an M sequence, and a Gold sequence, a discrete Fourier transform DFT sequence, or a constant amplitude zero auto-correlation CAZAC sequence.

In some embodiments, auto-correlation of the synchronization sequence is greater than or equal to a first threshold.

In some embodiments, the energy supply signal is a signal obtained by modulating the synchronization information by using at least one of the following modulation schemes:
amplitude modulation, frequency modulation, or phase modulation.

In some embodiments, the energy supply signal is a signal obtained by modulating the synchronization information or the synchronization sequence onto a continuous wave.

In some embodiments, the energy supply signal further carries trigger information, and the trigger information includes at least one of the following information:
information used to trigger the terminal device to receive downlink data;
information used to trigger the terminal device to send the reflected signal; or
information used to trigger the terminal device to access a network.

In some embodiments, a frequency used by the energy supply signal is the same as a frequency used by the reflected signal.

In some embodiments, a sending node of the energy supply signal is different from a receiving node of the reflected signal.

In some embodiments, there is an offset between a frequency used by the energy supply signal and a frequency used by the reflected signal.

In some embodiments, the energy supply node is a network device, and the energy supply node 600 further includes:
a receiving unit, configured to receive the reflected signal sent by the terminal device.

It should be understood that the apparatus embodiments may correspond to the method embodiments. For similar descriptions, reference may be made to the method embodiments. Specifically, the energy supply node 600 shown in FIG. 14 may correspond to a corresponding body that performs the methods provided in embodiments of this application, and the foregoing and other operations and/or functions of the units in the energy supply node 600 are respectively intended to implement corresponding procedures in the methods provided in embodiments of this application. For brevity, details are not described herein.

The communication devices in embodiments of this application are described above with reference to the accompanying drawings from a perspective of a functional module. It should be understood that, the functional module may be implemented in a hardware form, may be implemented by using instructions in a software form, or may be implemented by using a combination of hardware and a software module. Specifically, the steps in the method embodiments in embodiments of this application may be completed by using an integrated logic circuit of hardware in a processor and/or instructions in a software form. The steps in the methods disclosed with reference to embodiments of this application may be directly performed by a hardware decoding processor, or may be performed by using a combination of hardware in the decoding processor and a software module. Optionally, the software module may be located in a mature storage medium in the art, such as a random access memory, a flash memory, a read-only memory, a programmable read-only memory, an electrically erasable programmable memory, or a register. The storage medium is located in a memory. The processor reads information from the memory, and performs the steps in the foregoing method embodiments in combination with the hardware in the processor.

For example, the receiving unit 510 and the sending unit 520 or the sending unit 610 used above may be implemented by a transceiver.

FIG. 15 is a schematic diagram of a structure of a communication device 700 according to an embodiment of this application.

As shown in FIG. 15, the communication device 700 may include a processor 710.

The processor 710 may invoke a computer program from a memory and run the computer program to implement the methods in embodiments of this application.

As shown in FIG. 15, the communication device 700 may further include a memory 720.

The memory 720 may be configured to store indication information, and may be further configured to store code, instructions, and the like that are executed by the processor 710. The processor 710 may invoke a computer program from the memory 720 and run the computer program to implement the methods in embodiments of this application. The memory 720 may be a separate component independent of the processor 710, or may be integrated into the processor 710.

As shown in FIG. 15, the communication device 700 may further include a transceiver 730.

The processor 710 may control the transceiver 730 to communicate with another device. Specifically, the processor 710 may send information or data to the other device, or receive information or data sent by the other device. The transceiver 730 may include a transmitter and a receiver. The transceiver 730 may further include an antenna, and there may be one or more antennas.

It should be understood that the components in the communication device 700 are connected by using a bus system. In addition to a data bus, the bus system further includes a power bus, a control bus, and a status signal bus.

It should be further understood that, the communication device 700 may be the terminal device in embodiments of this application, and the communication device 700 may implement a corresponding procedure implemented by the terminal device in the methods in embodiments of this application. In other words, the communication device 700 in this embodiment of this application may correspond to the terminal device 500 in embodiments of this application, and may correspond to a corresponding body that performs the methods according to embodiments of this application. For brevity, details are not described herein. Similarly, the communication device 700 may be the energy supply node in embodiments of this application, and the communication device 700 may implement a corresponding procedure implemented by the energy supply node in the methods in embodiments of this application. In other words, the communication device 700 in this embodiment of this application may correspond to the energy supply node 700 in embodiments of this application, and may correspond to a corresponding body that performs the methods according to embodiments of this application. For brevity, details are not described herein.

In addition, an embodiment of this application further provides a chip.

For example, the chip may be an integrated circuit chip, which has a signal processing capability, and may implement or perform the methods, steps, and logical block diagrams disclosed in embodiments of this application. The chip may also be referred to as a system-level chip, a system chip, a chip system, or a system-on-chip, or the like. Optionally, the chip may be applied to various communication devices, so that a communication device in which the chip is installed can perform the methods, steps, and logical block diagrams disclosed in embodiments of this application.

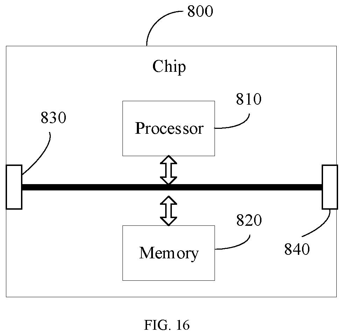

FIG. 16 is a schematic diagram of a structure of a chip 800 according to an embodiment of this application.

As shown in FIG. 16, the chip 800 includes a processor 810.

The processor 810 may invoke a computer program from a memory and run the computer program to implement the methods in embodiments of this application.

As shown in FIG. 16, the chip 800 may further include a memory 820.

The processor 810 may invoke a computer program from the memory 820 and run the computer program to implement the methods in embodiments of this application. The memory 820 may be configured to store indication information, and may be further configured to store code, instructions, and the like that are executed by the processor 810. The memory 820 may be a separate component independent of the processor 810, or may be integrated into the processor 810.

As shown in FIG. 16, the chip 800 may further include an input interface 830.

The processor 810 may control the input interface 830 to communicate with another device or chip, and specifically, may obtain information or data sent by another device or chip.

As shown in FIG. 16, the chip 800 may further include an output interface 840.

The processor 810 may control the output interface 840 to communicate with another device or chip, and specifically, may output information or data to the other device or chip.

It should be understood that, the chip 800 may be applied to the energy supply node in embodiments of this application, and the chip may implement a corresponding procedure implemented by the energy supply node in the methods in embodiments of this application, or may implement a corresponding procedure implemented by the terminal device in the methods in embodiments of this application. For brevity, details are not described herein.

It should be further understood that the components in the chip 800 are connected by using a bus system. In addition to a data bus, the bus system further includes a power bus, a control bus, and a status signal bus.

The processor used above may include but is not limited to:
a general-purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a discrete gate or a transistor logic device, a discrete hardware component, and the like.

The processor may be configured to implement or perform the methods, steps, and logical block diagrams disclosed in embodiments of this application. The steps of the methods disclosed with reference to embodiments of this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an erasable programmable memory, or a register. The storage medium is located in a memory. The processor reads information from the memory, and performs the steps of the foregoing methods in combination with the hardware in the processor.

The foregoing memory includes but is not limited to:
a volatile memory and/or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example but not limitative description, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (synch link DRAM, SLDRAM), and a direct rambus random access memory (Direct Rambus RAM, DR RAM).

It should be noted that the memories described in this specification are intended to include these memories and any other suitable types of memories.

An embodiment of this application further provides a computer-readable storage medium, configured to store a computer program. The computer-readable storage medium stores one or more programs, and the one or more programs include instructions. When the instructions are executed by a portable electronic device including a plurality of application programs, the portable electronic device is enabled to perform the wireless communication method provided in this application. Optionally, the computer-readable storage medium may be applied to the energy supply node in embodiments of this application, and the computer program enables a computer to perform a corresponding procedure implemented by the energy supply node in the methods in embodiments of this application. For brevity, details are not described herein. Optionally, the computer-readable storage medium may be applied to a mobile terminal/terminal device in embodiments of this application, and the computer program enables a computer to perform a corresponding procedure implemented by the mobile terminal/terminal device in the methods in embodiments of this application. For brevity, details are not described herein.

An embodiment of this application further provides a computer program product, including a computer program. Optionally, the computer program product may be applied to the energy supply node in embodiments of this application, and the computer program enables a computer to perform a corresponding procedure implemented by the energy supply node in the methods in embodiments of this application. For brevity, details are not described herein. Optionally, the computer program product may be applied to a mobile terminal/terminal device in embodiments of this application, and the computer program enables a computer to perform a corresponding procedure implemented by the mobile terminal/terminal device in the methods in embodiments of this application. For brevity, details are not described herein.

An embodiment of this application further provides a computer program. When the computer program is executed by a computer, the computer is enabled to perform the wireless communication method provided in this application. Optionally, the computer program may be applied to the energy supply node in embodiments of this application. When the computer program runs on a computer, the computer is enabled to perform a corresponding procedure implemented by the energy supply node in the methods in embodiments of this application. For brevity, details are not described herein. Optionally, the computer program may be applied to a mobile terminal/terminal device in embodiments of this application. When the computer program runs on a computer, the computer is enabled to perform a corresponding procedure implemented by the mobile terminal/terminal device in the methods in embodiments of this application. For brevity, details are not described herein.

An embodiment of this application further provides a communication system. The communication system may include the foregoing terminal device and network device, to form the communication system 100 shown in FIG. 1. The network device may serve as an energy supply node at the same time. Certainly, the communication system may alternatively include a functional node independent of the network device. For brevity, details are not described herein. It should be noted that the term "system" or the like in this specification may also be referred to as a "network management architecture", a "network system", or the like.

It should be further understood that terms used in embodiments of this application and the appended claims are merely intended to describe specific embodiments, but are not intended to limit embodiments of this application. For example, the singular forms "alan", "the", and "the foregoing" used in embodiments of this application and the appended claims are also intended to include plural forms, unless the context clearly indicates other meanings.

A person skilled in the art may be aware that, the units and the algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A skilled person may use different methods for each specific application to implement the described functions, but this implementation should not be considered as beyond the scope of embodiments of this application. When the function is implemented in a form of a software functional unit and sold or used as an independent product, the function may be stored in a computer-readable storage medium. Based on such an understanding, the technical solutions in embodiments of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory, a random access memory, a magnetic disk, or an optical disc.

A person skilled in the art may be further aware that, for convenience and brevity of description, for specific working processes of the system, the apparatuses, and the unit described above, refer to corresponding processes in the foregoing method embodiments. Details are not described herein again. In the several embodiments provided in this application, it should be understood that the disclosed system, apparatus, and method may be implemented in other manners. For example, the unit division, module division, or component division in the apparatus embodiments described above is merely logical function division, and there may be other division manners in actual implementation. For example, a plurality of units or modules or components may be combined or integrated into another system, or some units or modules or components may be ignored or not performed. For another example, the foregoing units/modules/components described as separate/display parts may be or may not be physically separated, that is, may be located in one place, or may be distributed on a plurality of network units. Some or all of the units/modules/components may be selected based on an actual requirement to achieve the objectives of embodiments of this application. Finally, it should be noted that the foregoing displayed or discussed mutual couplings or direct couplings or communication connections may be implemented by using some interfaces. The indirect couplings or communication connections between the apparatuses or the units may be in an electrical form, a mechanical form, or another form.

The foregoing content is merely specific implementations of embodiments of this application, but is not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A wireless communication method, wherein the method is applicable to a terminal device, and the method comprises:
receiving an energy supply signal, wherein the energy supply signal carries synchronization information for the terminal device and/or a synchronization sequence for determining the synchronization information; and
sending a reflected signal to a network device based on the synchronization information.

2. The method according to claim 1, wherein the sending a reflected signal to the network device based on the synchronization information comprises:
in a case that the synchronization information comprises a timing error value for the terminal device, sending the reflected signal and/or a frequency error value to the network device based on timing adjusted by using the timing error value; and/or
in a case that the synchronization information comprises a frequency error value for the terminal device, sending the reflected signal to the network device based on a frequency adjusted by using the frequency error value.

3. The method according to claim 1 or 2, wherein the method further comprises:
in a case that the energy supply signal carries the synchronization sequence, demodulating the energy supply signal to obtain the synchronization sequence; and
obtaining the synchronization information based on an estimation result obtained by performing correlation estimation on the synchronization sequence.

4. The method according to claim 3, wherein the obtaining the synchronization information based on an estimation result obtained by performing correlation estimation on the synchronization sequence comprises:
performing correlation estimation on the synchronization sequence and a local sequence generated by the terminal device, to obtain first timing and/or a first frequency; and
determining, as the synchronization information, an offset value between the first timing and timing used by the terminal device and/or an offset value between the first frequency and a transmit frequency used by the terminal device.

5. The method according to claim 1 or 2, wherein the method further comprises:
in a case that the energy supply signal carries the synchronization information, demodulating the energy supply signal to obtain the synchronization information.

6. The method according to claim 5, wherein in a case that the energy supply signal further carries the synchronization sequence, the reflected signal carries the synchronization sequence.

7. The method according to any one of claims 1 to 6, wherein the synchronization sequence comprises at least one of the following sequences: a pseudorandom sequence PN sequence, an M sequence, and a Gold sequence, a discrete Fourier transform DFT sequence, or a constant amplitude zero auto-correlation CAZAC sequence.

8. The method according to any one of claims 1 to 7, wherein autocorrelation of the synchronization sequence is greater than or equal to a first threshold.

9. The method according to any one of claims 1 to 8, wherein the energy supply signal is a signal obtained by modulating the synchronization information by using at least one of the following modulation schemes:
amplitude modulation, frequency modulation, or phase modulation.

10. The method according to any one of claims 1 to 9, wherein the energy supply signal is a signal obtained by modulating the synchronization information or the synchronization sequence onto a continuous wave.

11. The method according to any one of claims 1 to 10, wherein the energy supply signal further carries trigger information, and the trigger information comprises at least one of the following information:
information used to trigger the terminal device to receive downlink data;
information used to trigger the terminal device to send the reflected signal; or
information used to trigger the terminal device to access a network.

12. The method according to any one of claims 1 to 11, wherein a frequency used by the energy supply signal is the same as a frequency used by the reflected signal.

13. The method according to claim 12, wherein a sending node of the energy supply signal is different from a receiving node of the reflected signal.

14. The method according to any one of claims 1 to 11, wherein there is an offset between a frequency used by the energy supply signal and a frequency used by the reflected signal.

15. A wireless communication method, wherein the method is applicable to an energy supply node, and the method comprises:
sending an energy supply signal to a terminal device, wherein the energy supply signal carries synchronization information for the terminal device and/or a synchronization sequence for determining the synchronization information, and the synchronization information is used by the terminal device for sending a reflected signal.

16. The method according to claim 15, wherein the synchronization information comprises a timing error value for the terminal device, and/or the synchronization information comprises a frequency error value for the terminal device.

17. The method according to claim 15 or 16, wherein in a case that the energy supply signal further carries the synchronization sequence, the reflected signal carries the synchronization sequence.

18. The method according to any one of claims 15 to 17, wherein the synchronization sequence comprises at least one of the following sequences: a pseudorandom sequence PN sequence, an M sequence, and a Gold sequence, a discrete Fourier transform DFT sequence, or a constant amplitude zero autocorrelation CAZAC sequence.

19. The method according to any one of claims 15 to 18, wherein autocorrelation of the synchronization sequence is greater than or equal to a first threshold.

20. The method according to any one of claims 15 to 19, wherein the energy supply signal is a signal obtained by modulating the synchronization information by using at least one of the following modulation schemes:
amplitude modulation, frequency modulation, or phase modulation.

21. The method according to any one of claims 15 to 20, wherein the energy supply signal is a signal obtained by modulating the synchronization information or the synchronization sequence onto a continuous wave.

22. The method according to any one of claims 15 to 21, wherein the energy supply signal further carries trigger information, and the trigger information comprises at least one of the following information:
information used to trigger the terminal device to receive downlink data;
information used to trigger the terminal device to send the reflected signal; or
information used to trigger the terminal device to access a network.

23. The method according to any one of claims 15 to 22, wherein a frequency used by the energy supply signal is the same as a frequency used by the reflected signal.

24. The method according to claim 23, wherein a sending node of the energy supply signal is different from a receiving node of the reflected signal.

25. The method according to any one of claims 15 to 22, wherein there is an offset between a frequency used by the energy supply signal and a frequency used by the reflected signal.

26. The method according to any one of claims 15 to 25, wherein the energy supply node is a network device, and the method further comprises:
receiving the reflected signal sent by the terminal device.

27. A terminal device, comprising:
a receiving unit, configured to receive an energy supply signal, wherein the energy supply signal carries synchronization information for the terminal device and/or a synchronization sequence for determining the synchronization information; and
a sending unit, configured to send a reflected signal to a network device based on the synchronization information.

28. An energy supply node, comprising:
a sending unit, configured to send an energy supply signal to a terminal device, wherein the energy supply signal carries synchronization information for the terminal device and/or a synchronization sequence for determining the synchronization information, and the synchronization information is used by the terminal device for sending a reflected signal.

29. A terminal device, comprising:
a processor and a memory, wherein the memory is configured to store a computer program, and the processor is configured to invoke and run the computer program stored in the memory to perform the method according to any one of claims 1 to 14.

30. An energy supply node, comprising:
a processor and a memory, wherein the memory is configured to store a computer program, and the processor is configured to invoke and run the computer program stored in the memory to perform the method according to any one of claims 15 to 26.

31. A chip, comprising:
a processor, configured to invoke a computer program from a memory and run the computer program, so that a device in which the chip is installed performs the method according to any one of claims 1 to 14 or the method according to any one of claims 15 to 26.

32. A computer-readable storage medium, configured to store a computer program, wherein the computer program enables a computer to perform the method according to any one of claims 1 to 14 or the method according to any one of claims 15 to 26.

33. A computer program product, comprising computer program instructions, wherein the computer program instructions enable a computer to perform the method according to any one of claims 1 to 14 or the method according to any one of claims 15 to 26.

34. A computer program, wherein the computer program enables a computer to perform the method according to any one of claims 1 to 14 or the method according to any one of claims 15 to 26.
